# EUROPEAN PATENT APPLICATION

(11) **EP 3 438 909 A1**
(43) Date of publication of application: **06.02.2019**
(21) Application number: 18186012.3
(22) Date of filing: 27.07.2018
(51) Int. Cl.: G06Q 30/02, G06Q 30/00

(54) **RECOMMENDATION GUARANTEE SYSTEM**

(30) Priority: 04.08.2017 JP 2017151871
(71) Applicant: TOYOTA JIDOSHA KABUSHIKI KAISHA, Toyota-shi, Aichi-ken, 471-8571 (JP)
(72) Inventor: SHIGETO, Kazuhide, Aichi-ken, 471-8571 (JP)
(74) Representative: D Young & Co LLP

(57) **Abstract**

A recommendation guarantee system (1) includes a first acquisition unit (34) configured to acquire sequentially changing biological information on each of a plurality of providers providing a service, a storage unit (14) configured to store a plurality of pieces of provider information including the biological information, the pieces of provider information respectively corresponding to the providers, a second acquisition unit (12) configured to acquire request information on the service, and a selection unit (12) configured to (i) extract an item related to an item included in the request information from the respective pieces of provider information as an environmental condition, and obtain a degree of reliability relating to each provider based on the biological information included in the respective pieces of provider information, and (ii) select the provider providing the service based on the request information, the environmental condition, and the degree of reliability.

## Description

### BACKGROUND OF THE INVENTION

### 1. Field of the Invention

The invention relates to a technical field of a recommendation guarantee system that recommends a provider that provides a service (hereinafter referred to as a provider) to a user of the service (hereinafter referred to as a user).

### 2. Description of Related Art

As a system in a related field, for example, a system that recommends a parcel delivery agent to a user based on a current position of a parcel delivery agent candidate and store location information indicating a location of a real store when a product purchased by a user at a so-called online store is delivered from the real store related to the online store to a home of the user has been proposed (see Japanese Unexamined Patent Application Publication No. 2013-058118 (JP 2013-058118 A)).

### SUMMARY OF THE INVENTION

For example, a physical condition or the like of a provider providing a service such as a parcel delivery agent changes daily. As in a technology described in JP 2013-058118 A, when a parcel delivery agent is recommended to a user based on the current position of the parcel delivery agent candidate and the store location information, for example, parcel delivery is possible, but a person with a poor physical condition is likely to be a parcel delivery agent. In this case, quality of the service may be degraded (for example, an attitude of a response of the parcel delivery agent may be bad), and as a result, reliability or evaluation of the service is likely to be degraded.

The present invention provides a recommendation guarantee system capable of recommending a provider to a user further in consideration of a daily changing state of the provider.

An aspect of the present invention relates to a recommendation guarantee system. The recommendation guarantee system includes a first acquisition unit configured to acquire respective pieces of sequentially changing biological information for a plurality of providers providing a service, a storage unit configured to store a plurality of pieces of provider information including the acquired biological information, the pieces of provider information respectively corresponding to the providers, a second acquisition unit configured to acquire request information on the service, and a selection unit configured to (i) extract an item related to an item included in the request information from the respective pieces of provider information as an environmental condition, and obtain a degree of reliability relating to each provider based on the biological information included in the respective pieces of provider information, and (ii) select the provider providing the service based on the request information, the environmental condition, and the degree of reliability.

In the recommendation guarantee system according to the aspect of the present invention, the pieces of provider information may be guaranteed by a third party authority.

The recommendation guarantee system according to the aspect of the present invention may further include a presentation unit installed in the third party authority and configured to present an arbitration plan or a mediation plan when trouble information from at least one of a user of the service and the provider providing the service to the user is acquired.

In the recommendation guarantee system according to the aspect of the present invention, the storage unit may store user information on a user of the service, and the user information may include the number of times of use of the service by the user, and a provider evaluation from the provider providing the service to the user.

The recommendation guarantee system according to the aspect of the present invention may further include a first issuing unit configured to issue a point to the user based on the number of times of use and the provider evaluation.

The recommendation guarantee system according to the aspect of the present invention may further include a reception unit configured to receive a user evaluation from a user of the service.

The recommendation guarantee system according to the aspect of the present invention may further include a second issuing unit configured to issue a point to the provider evaluated using the user evaluation when the user evaluation is received by the reception unit.

The recommendation guarantee system according to the aspect of the present invention may further include a communication unit configured to provide information indicating the provider selected by the selection unit to the user of the service requesting the service.

In the recommendation guarantee system according to the aspect of the present invention, the communication unit may transmit information indicating the user of the service to the provider selected by the selection unit.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a block diagram illustrating a configuration of a recommendation guarantee system according to an embodiment;
FIG. 2 is a conceptual diagram illustrating a concept of provider information according to the embodiment;
FIG. 3 is a conceptual diagram illustrating a concept of a reliability factor in provider information according to the embodiment;
FIG. 4 is a diagram illustrating how to obtain a degree of reliability according to the embodiment;
FIG. 5 is a conceptual diagram illustrating a concept in a case where a recommendation guarantee system according to the embodiment is applied to delivery;
FIG. 6 is a flowchart illustrating a matching process in a case where the recommendation guarantee system according to the embodiment is applied to delivery; and
FIG. 7 is a flowchart illustrating a cargo collection process in a case where the recommendation guarantee system according to the embodiment is applied to delivery.

### DETAILED DESCRIPTION OF EMBODIMENTS

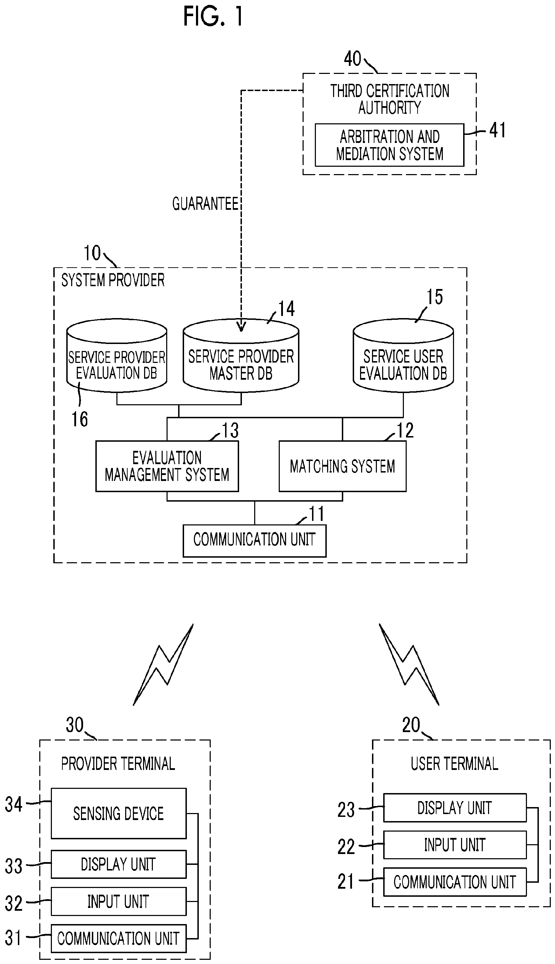

An embodiment relating to a recommendation guarantee system will be described with reference to FIGS. 1 to 7.

### Configuration

A configuration of the recommendation guarantee system according to the embodiment will be described with reference to FIG. 1. FIG. 1 is a block diagram illustrating a configuration of the recommendation guarantee system according to the embodiment.

In FIG. 1, a recommendation guarantee system 1 includes a system 10 (corresponding to "system provider" in FIG. 1) constructed using, for example, cloud computing, a communication terminal of a user (hereinafter referred to as a user terminal 20), and a communication terminal of the provider (hereinafter referred to as a provider terminal) 30.

The system 10 includes a communication unit 11, a matching system 12, an evaluation management system 13, a service provider master database 14 (hereinafter referred to as "master DB 14"), a service user evaluation database 15 (hereinafter referred to as a "user evaluation DB 15"), and a service provider evaluation database 16 (hereinafter referred to as a "provider evaluation DB 16").

The user terminal 20 includes a communication unit 21, an input unit 22, and a display unit 23. The user terminal 20 is configured to be able to communicate with the system 10 via the communication unit 21. The provider terminal 30 includes a communication unit 31, an input unit 32, a display unit 33, and a sensing device 34. The provider terminal is configured to be able to communicate with the system 10 via the communication unit 31. The sensing device 34 sequentially measures information (for example, a vital sign) indicating a state of a body of an owner of the provider terminal 30.

The recommendation guarantee system 1 has a matching function of connecting a provider of a service with a user desiring to use the service. The recommendation guarantee system 1 has an evaluation management function for managing mutual evaluation between the provider and the user after the service is provided from the provider connected by the matching function to the user.

In order to realize the matching function, information on the provider (hereinafter referred to as "provider information") input via the provider terminal 30 is stored in the master DB 14 of the system 10. The matching system 12 of the system 10 connects the provider with the user based on request information indicating conditions of a service that is desired by the user, which is input by the user terminal 20, and the provider information stored in the master DB 14. Here, the provider information stored in the master DB 14 is inspected and guaranteed by a third certification authority 40.

In order to realize the evaluation management function, the evaluation management system 13 of the system 10 stores information indicating the evaluation for the provider by the user input via the user terminal 20 in the provider evaluation DB 16 and stores information indicating the evaluation for the user by the provider input via the provider terminal 30 in the user evaluation DB 15. The information indicating the evaluation stored in each of the user evaluation DB 15 and the provider evaluation DB 16 may be used in the matching function.

The third certification authority 40 includes an arbitration and recommendation system 41 in order to cope with troubles caused between the provider and the user connected using the matching function of the recommendation guarantee system 1.

### Master DB 14

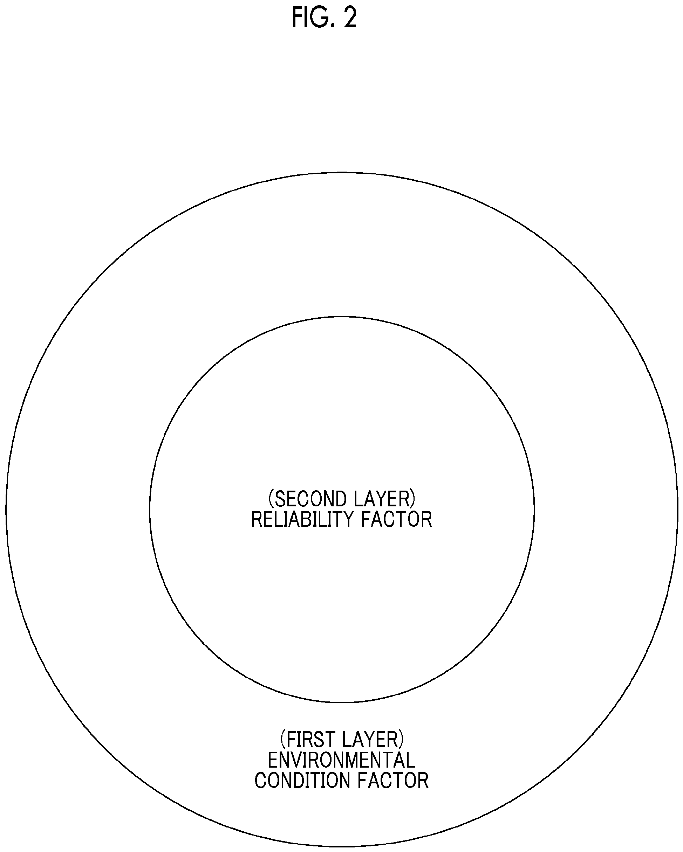

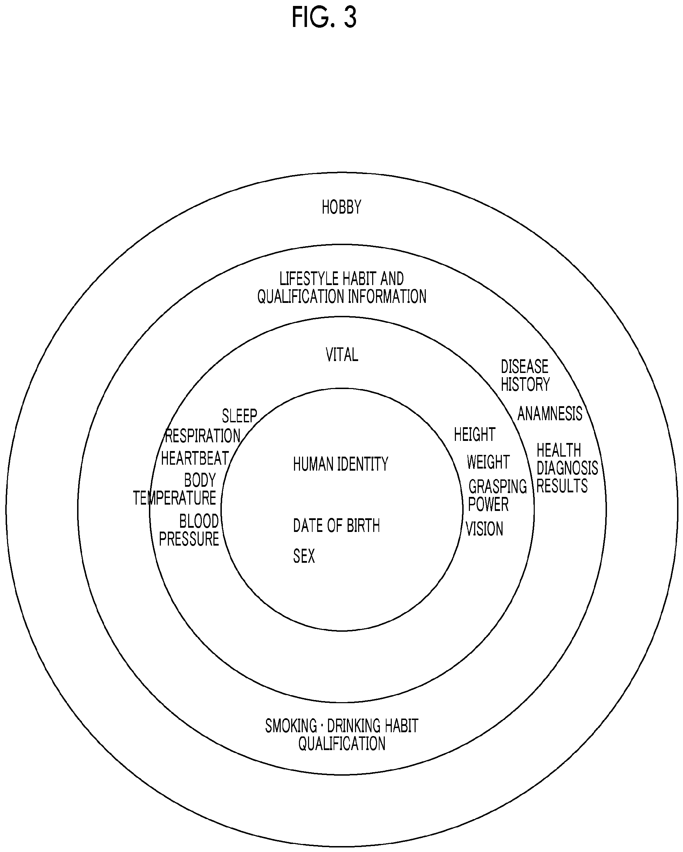

Here, the master DB 14 will be described with reference to FIGS. 2 and 3. FIG. 2 is a conceptual diagram illustrating a concept of the provider information according to the embodiment. FIG. 3 is a conceptual diagram illustrating a concept of a reliability factor in the provider information according to the embodiment.

The provider information on each provider has a plurality of items. When the provider information is stored in the master DB 14, each of the items of provider information is classified into a plurality of layers. For example, as illustrated in FIG. 2, a plurality of items of the provider information is classified into a first layer relating to an environmental condition factor and a second layer relating to a reliability factor.

The environmental condition factor includes, for example, an item conceivable to be considered when the user selects a service provider, such as an area in which a service can be provided, a time period in which a service can be provided, a fee, conditions specific to a service (for example, the maximum size of a deliverable cargo, and the maximum weight in the case of a delivery service).

The reliability factor includes an item indicating a state of the provider (a natural person who actually provides a service in a case where the provider is a corporation). Specifically, for example, as illustrated in FIG. 3, the reliability factor includes an item relating to human identity, an item relating to a state of a body (indicated as "vital" in FIG. 3), an item relating to a lifestyle habit and qualification information, and an item relating to a hobby.

A configuration (for example, layer, item (category), or number of items) of the master DB 14 is not limited to the configuration illustrated in FIGS. 2 and 3 and may be appropriately changed depending on a service. Alternatively, a plurality of master DBs having different configurations is constructed, and the master DB to be used by the service may be changed.

For example, sleep, respiration, heartbeat, body temperature, blood pressure, and the like among the items relating to the state of the body are sequentially updated with information based on the output of the sensing device 34 of the provider terminal 30. An example of the sensing device 34 is a sleep control sensor or a sphygmomanometer.

### Matching Process

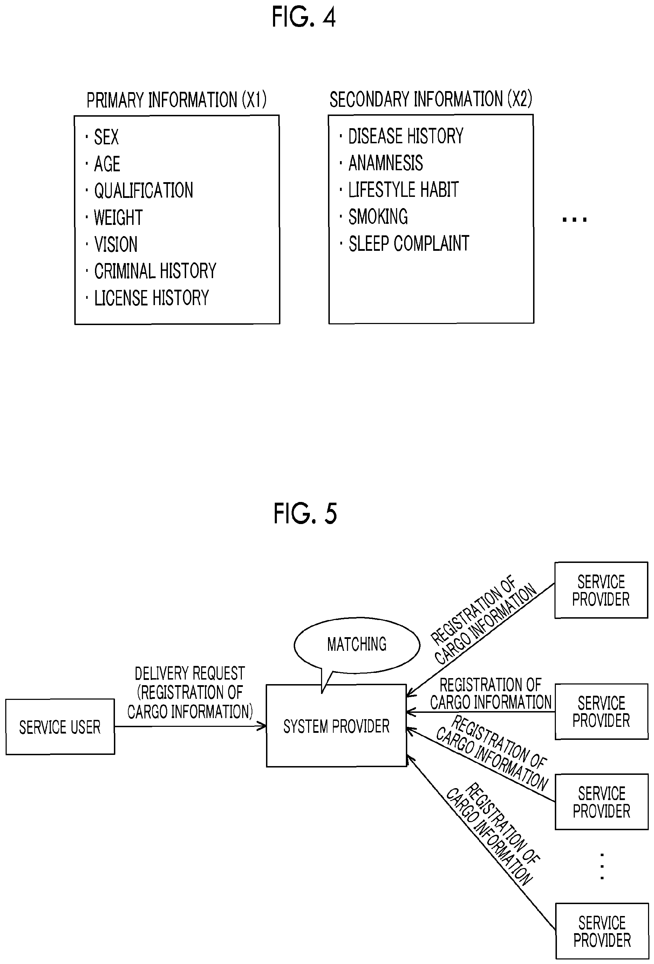

A matching process to be performed by the matching system 12 of the system 10 will be described with reference to FIG. 4. FIG. 4 is a diagram illustrating how to obtain a degree of reliability according to the embodiment.

When the matching system 12 acquires the request information from the user terminal 20 via the communication unit 11, the matching system 12 compares the request information with the items included in the environmental condition factor in the provider information stored in the master DB 14 and extracts one or a plurality of providers satisfying the condition indicated by the request information.

The matching system 12 obtains the degree of reliability of the one or plurality of providers based on the items included in the reliability factor of information on the one or plurality of extracted providers. The degree of reliability is obtained, for example, as follows. That is, the items included in the reliability factor are divided into a plurality of groups ("primary information", "secondary information", ... in FIG. 4), evaluation points of each group ("XI", "X2", ... in FIG. 4) are obtained. The degree of reliability is obtained through, for example, a linear combination of evaluation points of each group. In this case, when the degree of reliability is F(Y), the degree of reliability is expressed as "F(Y) = A • X1 + B • X2 + ... " ("A" and "B" are weighting coefficients).

How to group the items included in the reliability factor may be appropriately changed according to the service. Also, the type of evaluation point that is attached to which item may be appropriately changed according to the service. For example, in the case of a car allocation service, evaluation points of items relating to a body condition such as sleep or a body temperature may be relatively high. Alternatively, in the case of a translation service, an evaluation point of an item relating to a score of the TOEIC (registered trademark) or a grade level of the English proficiency test (registered trademark) may be relatively high. Alternatively, in the case of a health counseling service, an evaluation point of an item relating to the presence or absence of a doctor license or a nurse license may be relatively high. The evaluation point is not limited to a positive value and may be a negative value. For example, while the evaluation point in a case where a there is no smoking habit may be a positive value, whereas the evaluation point in a case where there is a smoking habit may be a negative value.

The matching system 12 selects, for example, the provider having the highest degree of reliability among the one or plurality of providers as a person who provides a service to a user carrying the user terminal 20. Thereafter, the matching system 12 transmits information indicating the provider to the user terminal 20, and transmits information indicating the user to the provider terminal 30.

### Delivery Service

Here, a matching process and the like in a case where the recommendation guarantee system 1 is applied to a delivery service will be described in detail with reference to FIGS. 5 to 7.

As illustrated in FIG. 5, in the case of the delivery service, a user performs a delivery request (registration of cargo information) via the user terminal 20. Information on the delivery request includes, for example, a delivery destination, a cargo loading time, an arrival time, and information on a cargo (a type, a size, an item name, a weight, a packing style, a handling manner, an image, notes, a packing state, and a number).

On the other hand, each provider registers information on an empty car that obtains cargoes to be carried (hereinafter referred to as an "empty car"), which is included in the environmental condition factor in the above-described provider information via the provider terminal 30. As a result, the provider information stored in the master DB 14 is updated. The information on an empty car includes, for example, a type of car (a car with a freezer, a refrigerating car, or the like), a cargo room shape and a cargo carrier shape (a wing or a container), a total loading amount, a loading method (flat piling or pallet loading), an already loaded amount (or an empty space), a type of already loaded cargo, and a travel stop.

A new provider (that is, a provider in which the provider information is not stored in the master DB 14) registers information indicating each of a plurality of items included in the reliability factor in the provider information, in addition to the information on an empty car.

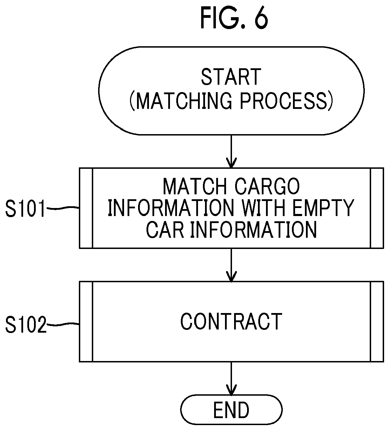

In the flowchart of FIG. 6, the matching system 12 of the system 10 performs matching between the cargo information and the empty car information based on the information indicating the delivery request, and the provider information stored in the master DB 14 (step S101). Specifically, the matching system 12 compares the delivery request with the items (particularly, the information on empty cars) included in the environmental condition factor in the provider information, and extract one or a plurality of providers satisfying conditions indicated by the delivery request. Subsequently, the matching system 12 obtains the reliability of the one or plurality of providers based on a plurality of items included in the reliability factors among the extracted information on one or a plurality of providers. Then, the matching system 12 selects, for example, the provider with the highest degree of reliability among the one or plurality of providers. Thereafter, the matching system 12 transmits information indicating the selected provider to the user terminal 20, and transmits information (furthermore, the delivery request) indicating the user to the provider terminal 30 carried by the selected provider.

After the process of step S101, when a contract relating to a service (here, delivery) is concluded between the user and the selected provider, the matching system 12 associates, for example, the delivery request with the information on an empty car of the selected provider (step S102). As a result, the delivery request and the information on empty cars that have been associated with each other are excluded from targets of matching between the cargo information and the empty car information.

In principle, the contract is directly exchanged between the user and the provider, but information indicating that the contract has been concluded is also transmitted to the matching system 12. This is because the user or the like has to withdraw the delivery request or the like by him or herself when the information indicating that the contract has been concluded is not transmitted to the matching system 12.

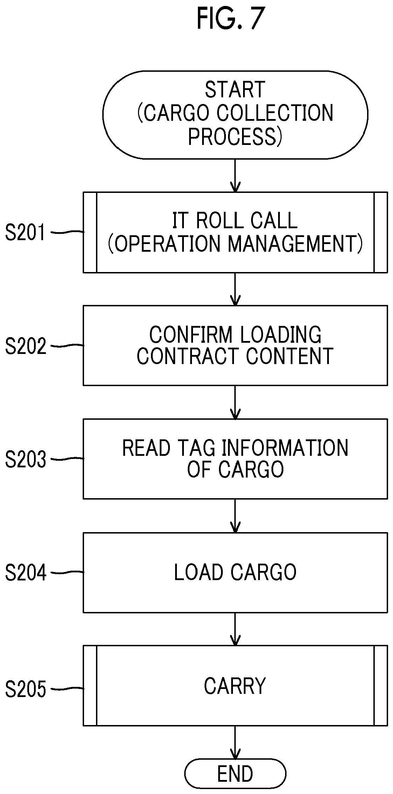

A cargo collection process that is performed by the provider after the contract is concluded will be described with reference to the flowchart of FIG. 7. After the contract is concluded, the user registers, for example, information corresponding to the delivery request in a tag such as a QR code (registered trademark) or an IC chip and affixes the tag to the cargo.

In the flowchart of FIG. 7, the provider performs a so-called IT roll call (step S201). In the IT roll call, for example, personal identification, license confirmation, alcohol check, and the like are performed. For the IT roll call, an existing technology can be applied, and therefore, detailed description thereof will be omitted.

When there is no problem as a result of the IT roll call, content of a loading contract (content corresponding to the delivery request) is displayed on the display unit 33 of the provider terminal 30. The provider confirms the displayed content of the loading contract (step S202) and collects a cargo at a designated place by a designated time.

Thereafter, the provider confirms the tag affixed to the cargo (step S203) and loads the cargo (step S204). Thereafter, the provider carries the cargo to the designated delivery destination (step S205).

The process illustrated in FIG. 7 is an example, and the present invention is not limited thereto. For example, in a case where a delivery distance is relatively short as in delivery within the same city or the same district, the IT roll call may be omitted when a delivery aspect corresponds to a so-called hand carry.

In an example in which the recommendation guarantee system 1 is applied to a delivery service, the user is not limited to an individual and may be a business such as a retailer. That is, for example, when the retailer delivers a product ordered by a customer to the customer, the retailer may use the recommendation guarantee system 1 as a user. Alternatively, a person who sells large-sized materials such as industrial products or building materials may use the recommendation guarantee system 1 as a user.

### Evaluation Management Process

An evaluation management process that is performed by the evaluation management system 13 of the system 10 will be described.

When a user provided with a service inputs an evaluation relating to the provider of the service via the user terminal 20, information indicating the input evaluation is associated with the provider and transmitted to the evaluation management system 13. When the evaluation management system 13 acquires the information indicating the evaluation associated with the provider, the evaluation management system 13 stores the information indicating the evaluation in the provider evaluation DB 16 as an evaluation for the provider associated with the information.

When the provider who has provided the service inputs an evaluation relating to the user provided with the service via the provider terminal 30, information indicating the input evaluation is associated with the user and transmitted to the evaluation management system 13. When the evaluation management system 13 acquires the information indicating the evaluation associated with the user, the evaluation management system 13 stores the information indicating the evaluation in the user evaluation DB 15 as an evaluation for the user associated with the information. The evaluation management system 13 stores the number of times the user uses the matching function of the recommendation guarantee system 1 in the user evaluation DB 15.

The evaluation management system 13 issues a point to the user based on the information indicating the evaluation stored in the user evaluation DB 15 and the number of times of use. The evaluation management system 13 issues a point to the provider based on the information indicating the evaluation stored in the provider evaluation DB 16.

The evaluation management system 13 issues a point to the provider even when a predetermined item included in the above-described reliability factor in the provider information stored in the master DB 14 is added. The "predetermined item" includes an item that increases a value or an evaluation of the provider, such as a new qualification.

The point issued by the evaluation management system 13 can be used for, for example, a system usage fee for the recommendation guarantee system 1, a usage fee for options (for example, limited to a specific qualification and license holder) in the matching function, or a discount on costs of qualification acquisition course or training of a partner.

### Arbitration and Mediation by Third Certification Authority

The arbitration and mediation system 41 included in the third certification authority 40 is constructed using artificial intelligence or the like, for example. When the arbitration and mediation system 41 acquires trouble information from at least one of the user terminal 20 and the provider terminal 30, the arbitration and mediation system 41 transmits an arbitration plan or a mediation plan for the acquired trouble information to at least one of the user terminal 20 and the provider terminal 30.

### Technical Effects

### 1. Matching Function

As described above, the matching system 12 of the system 10 compares the request information from the user terminal 20 with the items included in the environmental condition factor in the provider information stored in the master DB 14 and extracts one or a plurality of providers satisfying the condition indicated by the request information. The matching system 12 obtains the degree of reliability of the one or plurality of providers based on the items included in the reliability factor in the information on the one or plurality of extracted providers. The matching system 12 selects, for example, the provider with the highest degree of reliability among the one or plurality of providers.

That is, the matching system 12 selects the provider further in consideration of the reliability factor in the provider information, in addition to the request information and the environmental condition factor in the provider information, instead of selecting the provider (that is, connecting the user with the provider) from the request information and the environmental condition factor in the provider information ("information on a delivery request" and "information on an empty car" in an example of a delivery service).

Here, in particular, the reliability factor includes information (items) on a daily changing state of a body of the provider, as illustrated in FIG. 3. Therefore, it can be said that the matching system 12 selects a provider suitable for the request information from the user in consideration of the daily changing state of the body of the provider. Therefore, it is possible to curtail degradation of the quality of the service to be provided to the user due to a physical condition of the provider. As a result, it is possible to curtail degradation of the evaluation of the user or the like with respect to the recommendation guarantee system 1.

The third certification authority 40 guarantees the provider information stored in the master DB 14. Therefore, it is possible to support the reliability of the recommendation guarantee system 1. As a result, it is possible to improve the reliability of the user with respect to the recommendation guarantee system 1.

### 2. Evaluation Management Function

The evaluation management system 13 of the system 10 issues a point to each of the user and the provider based on the results of mutual evaluations of the user and the provider of the service (that is, the information indicating the evaluations stored in the user evaluation DB 15 and the provider evaluation DB 16) or the like. It is expected that the user and the provider will attempt to improve their evaluations by introducing a mechanism as described above. As a result, for example, improvement of quality of services to be provided and a reduction in troubles between the user and the provider is expected.

### 3. Arbitration and Mediation of Third Certification Authority

In the recommendation guarantee system 1, the provider is not limited to a business and it is possible to register an individual who is not a business as the provider (that is, information on the individual who is not a business is stored in the master DB 14 as the provider information).

In a case where a trouble between the user and the provider has to be solved between the user and the provider, a grudge is likely to remain. In particular, when an individual who is not a business is the provider, the individual is relatively highly likely to be unable to appropriately cope with the trouble.

In the present embodiment, as described above, the arbitration and mediation system 41 transmits the arbitration plan or the mediation plan for trouble information to at least one of the user terminal 20 and the provider terminal 30. Therefore, an opinion of a third party (that is, the arbitration plan or the mediation plan) is indicated against the trouble occurring between the user and the provider, and therefore, it is expected that the trouble will be appropriately solved.

### Modification Examples

(1) In the above-described embodiment, a specific example of the matching process includes the delivery service, is not limited to the delivery service, and is also applicable to, for example, a car allocation service, a lodging service, and the like.
(2) A configuration in which the number of items of conditions that can be designated using the request information transmitted from the user terminal 20 to the system 10 (particularly, items relating to a person of the provider) may be increased by increasing the amount paid by the user as a system usage fee may be adopted. With the configuration as described above, it is possible to improve a likelihood of the provider desired by the user being selected by the matching system 12.
(3) According to a type of application for using the recommendation guarantee system 1 in each of the user terminal 20 and the provider terminal 30, a security level of each of the user terminal 20 and the provider terminal 30, or the like, (i) the number of items of provider information to be used for the matching process, and (ii) the number of items included in the information indicating the provider to be transmitted to the user terminal 20 after the provider is selected or the number of items included in the information indicating the user to be transmitted to the provider terminal 30 may be changed.
(4) At the time of the matching process, the matching system 12 may also consider the information indicating the evaluation stored in the provider evaluation DB 16, in addition to the provider information stored in the master DB 14. Specifically, when the degree of reliability of the provider is obtained, the matching system 12 may obtain the degree of reliability degree further in consideration of the information indicating the evaluation, in addition to the reliability factor in the provider information.
(5) In the matching process of the matching system 12, in a case where there is a designation of the qualification or license in the request information, the evaluation management system 13 adds a score to the selected provider according to the type of the qualification or license.

Various aspects of the present invention that are derived from the embodiments and modification examples described above will be described below.

A recommendation guarantee system according to an aspect of the present invention includes a first acquisition unit configured to acquire respective pieces of sequentially changing biological information for a plurality of providers providing a service, a storage unit configured to store a plurality of pieces of provider information respectively corresponding to the providers and including the acquired biological information; a second acquisition unit configured to acquire request information on the service, and a selection unit configured to (i) extract an item related to an item included in the request information from the respective pieces of provider information as an environmental condition, and obtain a degree of reliability relating to each provider based on the biological information included in the respective pieces of provider information, and (ii) select the provider providing the service based on the request information, the environmental condition, and the degree of reliability.

The "sequentially changing biological information of the provider" may include a sleeping time, weight, or the like, in addition to so-called vital signs such as a body temperature, a heartbeat, a blood pressure, and respiration. The biological information as described above is sequentially measured by a sensing device carried by the provider, for example. The "provider information" includes any information other than the biological information on the provider, in addition to the biological information. Any information includes, for example, a time period in which a service can be provided, a place of residence, information on lifestyle habit, information on a qualification, information on a hobby, health diagnosis results, and an anamnesis.

The "request information" includes, for example, information specific to a service, in addition to a date and time or a location at which the service is desired to be used. For example, in the case of a parcel delivery service, the information specific to a service is an address of a delivery destination, a type of cargo, and the like. For example, in the case of a stopping service, the information specific to a service is information on a store, information on products, and the like.

The "environmental condition" is an item related to an item included in the request information in the provider information. Specifically, examples of the environmental condition may include a time period in which a service related to a date and time when a service is desired to be used can be provided, or a place of residence related to a place at which the service is desired to be used.

The "degree of reliability" is an index indicating the degree of reliability relating to the provider, and is obtained based on the biological information. The degree of reliability may be obtained, for example, by scoring according to whether or not a blood pressure is within a reference range according to age or whether or not a sleeping time is within an appropriate range. The "degree of reliability" may not be obtained based on solely the biological information, and may be obtained based on information on a lifestyle habit, information on a qualification and license, or the like, in addition to the biological information, for example.

According to the above aspect, the provider is selected based on the request information, the environment information, and the degree of reliability. That is, according to the above aspect, it is possible to recommend the provider to a user further in consideration of a daily changing state of the provider.

The "sensing device 34" and the "master DB 14" according to the above-described embodiment are examples of the "first acquisition unit" and the "storage unit", respectively. The "matching system 12" according to the above embodiment is an example of the "second acquisition unit" and the "selection unit".

In an aspect of the present invention, the pieces of provider information may be guaranteed by a third party authority. According to an aspect of the present invention, it is possible to support the reliability of the recommendation guarantee system. As a result, it is possible to improve the reliability of the user with respect to the recommendation guarantee system.

In an aspect of the present invention, the recommendation guarantee system may further include a presentation unit that is installed in the third party authority and is present an arbitration plan or a mediation plan when trouble information from at least one of a user of the service and the provider providing the service to the user is acquired.

When a trouble occurs between the user and the provider, the trouble has to be solved between both. This is because a service contract is exchanged between the user and the provider. However, when measures are not taken against the trouble, the reliability of the user with respect to the recommendation guarantee system is likely to be degraded.

According to an aspect of the present invention, since an arbitration plan or a mediation plan is presented by the presentation unit, a trouble between the user and the provider can be expected to be resolved relatively rapidly. As a result, it is possible to curtail or prevent a degradation of the reliability of the recommendation guarantee system. For example, artificial intelligence or the like can be applied to the presentation unit. The "arbitration and mediation system 41" according to the above-described embodiment is an example of the "presentation unit".

In an aspect of the present invention, the storage unit may store user information on a user of the service, and the user information may include the number of times of use of the service by the user, and a provider evaluation from the provider providing the service to the user. In an aspect of the present invention, the recommendation guarantee system may further include a first issuing unit that issues a point to the user based on the number of times of use and the provider evaluation.

When a mechanism allowing the issued point to be used, for example, for a discount of a usage fee of a service or a paid option (for example, delivery on the same day in a parcel delivery service) is introduced, an increase in users who actively use the recommendation guarantee system can be expected. The "user evaluation DB 15" according to the above-described embodiment is another example of the "storage unit". The "evaluation management system 13" according to the above-described embodiment is an example of the "first issuing unit".

In an aspect of the present invention, the recommendation guarantee system may further include a reception unit configured to receive a user evaluation from a user of the service, and a second issuing unit configured to issue a point to the provider evaluated using the user evaluation when the user evaluation is received by the reception unit.

When a mechanism allowing the issued point to be used, for example, for a discount on a fee related to acquisition of qualifications relating to services is introduced, improvement in quality of service of the provider can be expected. The "evaluation management system 13" according to the above-described embodiment is an example of the "reception unit" and the "second issuing unit".

The present invention is not limited to the above-described embodiments, and can be appropriately changed within a range that does not contradict the gist or idea of the invention that can be read from the claims and the entire specification, and the recommendation guarantee system according to such a change is also included in the technical scope of the present invention.

## Claims

1. A recommendation guarantee system (1) comprising:
a first acquisition unit (34) configured to acquire biological information on each of a plurality of providers providing a service, the biological information being information sequentially changing;
a storage unit (14) configured to store a plurality of pieces of provider information including the biological information, the pieces of provider information respectively corresponding to the providers;
a second acquisition unit (12) configured to acquire request information on the service; and
a selection unit (12) configured to (i) extract an item related to an item included in the request information from the respective pieces of provider information as an environmental condition, and obtain a degree of reliability relating to each provider based on the biological information included in the respective pieces of provider information, and (ii) select the provider providing the service based on the request information, the environmental condition, and the degree of reliability.

2. The recommendation guarantee system (1) according to claim 1, wherein the pieces of provider information are guaranteed by a third party authority (40).

3. The recommendation guarantee system (1) according to claim 2, further comprising a presentation unit (41) installed in the third party authority (40) and configured to present an arbitration plan or a mediation plan when trouble information from at least one of a user of the service and the provider providing the service to the user is acquired.

4. The recommendation guarantee system (1) according to any one of claims 1 to 3, wherein:
the storage unit (14) stores user information on a user of the service; and
the user information includes the number of times of use of the service by the user, and a provider evaluation from the provider providing the service to the user.

5. The recommendation guarantee system (1) according to claim 4, further comprising a first issuing unit (13) configured to issue a point to the user based on the number of times of use and the provider evaluation.

6. The recommendation guarantee system (1) according to any one of claims 1 to 5, further comprising a reception unit (13) configured to receive a user evaluation from a user of the service.

7. The recommendation guarantee system (1) according to claim 6, further comprising a second issuing unit (13) configured to issue a point to the provider evaluated using the user evaluation when the user evaluation is received by the reception unit (13).

8. The recommendation guarantee system (1) according to any one of claims 1 to 7, further comprising a communication unit (11) configured to provide information indicating the provider selected by the selection unit (12) to a user of the service requesting the service.

9. The recommendation guarantee system (1) according to claim 8, wherein the communication unit (11) transmits information indicating the user of the service to the provider selected by the selection unit (12).
